# EUROPÄISCHE PATENTSCHRIFT

(11) **EP 1 939 403 B1**
(45) Veröffentlichungstag und Bekanntmachung des Hinweises auf die Patenterteilung: **16.03.2016**
(21) Anmeldenummer: 07024484.3
(22) Anmeldetag: 18.12.2007
(51) Int. Cl.: B21D 53/78, B29K 707/04, B29C 70/34, B29D 99/00, F01D 5/14, F04D 29/32, F04D 29/38, B23P 15/04, F02K 3/06

(54) **Hybrid-Fanschaufel und Verfahren zu deren Herstellung**
Hybrid fan blade and method for their manufacture
Aube de soufflante hybride et son procédé de fabrication

(30) Priorität: 21.12.2006 DE 102006061915
(43) Veröffentlichungstag der Anmeldung: 02.07.2008
(73) Patentinhaber: Rolls-Royce Deutschland Ltd & Co KG, 15827 Blankenfelde-Mahlow (DE)
(72) Erfinder: Schreiber, Karl, OT Am Mellensee 15838 Am Mellensee (DE)

(56) Entgegenhaltungen:
- EP-A1- 1 450 006
- EP-A2- 1 106 783
- GB-A- 2 391 270
- US-A- 3 637 325

## Beschreibung

Die Erfindung betrifft eine Hybrid-Fanschaufel für ein Gasturbinentriebwerk, die eine Tragstruktur aus einem Faserverbundwerkstoff und eine metallische Hüllstruktur, bestehend aus einem konvex gewölbten saugseitigen Deckblech und einem mit diesem verbundenen konkav gewölbten druckseitigen Deckblech, umfasst, sowie ein Verfahren zur Herstellung einer derartigen Hybrid-Fanschaufel.

Fanschaufeln aus einem Faserverbundwerkstoff weisen ein vergleichsweise geringes Gewicht auf und verfügen zudem über eine hohe spezifische Festigkeit und eine hohe Eigendämpfung zur Verminderung von Schwingungen. Zur Erzielung einer ausreichenden Erosionsbeständigkeit und einer hohen Schlagfestigkeit gegenüber auf die Schaufeln auftreffenden Fremdkörpern, beispielsweise Vögeln, ist die aus dem Faserverbundmaterial bestehende Tragstruktur von einer metallischen Hüllstruktur umgeben. Aufgrund der hohen Biegebelastungen der Fanschaufel im Übergangsbereich zwischen dem Schaufelblatt und dem Schaufelfuß besteht jedoch die Gefahr der Ablösung der Hüllstruktur von der an deren Innenflächen verklebten Tragstruktur und damit einer erheblichen Verkürzung der Lebensdauer der Hybrid-Fanschaufel.

Aus der EP 1 106 783 A2 ist ein Verfahren zum Herstellen einer Schaufel einer Strömungsmaschine bekannt, bei dem eine aus einem einstückigen Blech mit darauf befestigtem Metallfilzgewebe bestehende ebene Blech-Gewebe-Einheit zu einem Hohlkörper mit verschweißten Enden vorgeformt wird. Die einteilige Vorform wird in einen Formhohlraum eines zweiteiligen Formwerkzeugs eingelegt und durch ein Innenhochdruck-Umformverfahren in die gewünschte Fertigform gepresst. Nach erfolgter Umformung der Blech-Gewebe-Einheit zur Hüllstruktur wird der die Tragstruktur bildende Verbundwerkstoff in den Hohlraum der Hüllstruktur eingebracht und vollständig mit diesem ausgefüllt. Das Verbundmaterial dringt auch in das Metallfilzgewebe ein, so dass ein inniger Verbund zwischen der Tragstruktur und der Hüllstruktur erzeugt wird. Die Außenkontur des Formwerkzeugs entspricht der vorgefertigten Sollkontur der Hüllstruktur, die mit dem Verbundmaterial befüllt werden muss, wobei zunächst das Fasermaterial eingelegt wird und anschließend der schmelzflüssige Werkstoff durch Hochdruckinfiltration eingebracht wird. Die Infiltration der Schmelze in das zuvor eingebrachte Fasergelege erfolgt unter ausreichend hohem Druck, damit die Schmelze in alle Hohlräume und bis an die Innenfläche der Hüllstruktur bzw. bis in das Metallfilzgewebe gelangt.

Die EP 1 450 006 A1 offenbart eine Verdichterschaufel für ein Flugzeugtriebwerk, die einen Schaufelkern aus einem Faserverbundwerkstoff und eine metallische Umhüllung umfasst. Die Umhüllung ist mehrteilig aufgebaut und besteht aus einem saugseitig und einem druckseitig mit dem Schaufelkern über ein Metallgewebe verbundenen Deckblech.

Der Erfindung liegt die Aufgabe zugrunde, eine Hybrid-Fanschaufel so auszubilden, dass eine innige Verbindung zwischen der Tragstruktur und der Hüllstruktur und damit eine lange Lebensdauer der Fanschaufel gewährleistet ist.

Erfindungsgemäß wird die Aufgabe mit einer gemäß den Merkmalen des Patentanspruchs 1 ausgebildeten Hybrid-Fanschaufel sowie einem Verfahren zu deren Herstellung gemäß den Merkmalen der Patentansprüche 3 oder 4 gelöst.

Der Grundgedanke der Erfindung besteht in der Begrenzung der die Tragstruktur umgebenden Hüllstruktur auf den Bereich des Schaufelblatts, wobei das saugseitige Deckblatt auf Zug und das druckseitige Deckblatt der Hüllstruktur auf Druck vorgespannt ist und somit die Hüllstruktur elastisch an die Tragstruktur angepresst wird.

Die elastische Vorspannung der Deckbleche kann zum einem dadurch erzielt werden, dass nach dem Verkleben des druckseitigen Deckblechs mit einer vorgefertigten Tragstruktur das saugseitige Deckblech vor dem Verkleben mit der Tragstruktur und dem Verschweißen mit dem druckseitigen Deckblech erwärmt und dadurch dessen Länge vergrößert und nach dem Verschweißen und der Abkühlung wieder seine Ursprungsform einnimmt, wobei die dadurch bewirkte Zugspannung im saugseitigen Deckblech auf das konkav gewölbte druckseitige Deckblech wirkt und dadurch in diesem gleichzeitig eine Druckspannung erzeugt.

Alternativ kann die elastische Zug- bzw. Druckspannung auch dadurch erzeugt werden, dass die Hüllstruktur mit lose eingelegten Faserschichten in einem Schweißformwerkzeug so verschweißt wird, dass sie zunächst eine Vorform aufweist, die schlanker als die Endform ist. Anschließend wird in einem die Fertigkontur der Fanschaufel aufweisenden Infiltrationswerkzeug ein Harz in das Fasermaterial infiltriert, und zwar auch mit einem solchen Druck in die abgedichtete Vorform der Hüllstruktur, dass deren saugseitiges Deckblech bis zum Anschlag an die Innenkontur des Infiltrationswerkzeugs gedehnt wird und mithin unter Zugspannung steht, die auf das konkav gewölbte saugseitige Deckblech wirkt und in diesem eine elastische Druckspannung erzeugt. Die Klebeverbindung zwischen Hüll- und Tragstruktur erfolgt in diesem Fall mit dem Infiltrationsharz.

Aufgrund der Beschränkung der Hüllstruktur auf den Bereich des Schaufelblattes und der durch die elastische Vorspannung der Deckbleche erzielten innigen Verbindung mit dem Faserverbundmaterial wird die durch Schaufelschwingungen bedingte Gefahr des Ablösens der Hüllstruktur von der Tragstruktur verringert und die Lebensdauer von Hybrid-Fanschaufeln erhöht. Die Verbindung zwischen Hüllstruktur und Tragstruktur wird bei der zuerst erwähnten Verfahrensvariante noch durch die Möglichkeit der Verwendung eines besonders geeigneten Klebers verbessert.

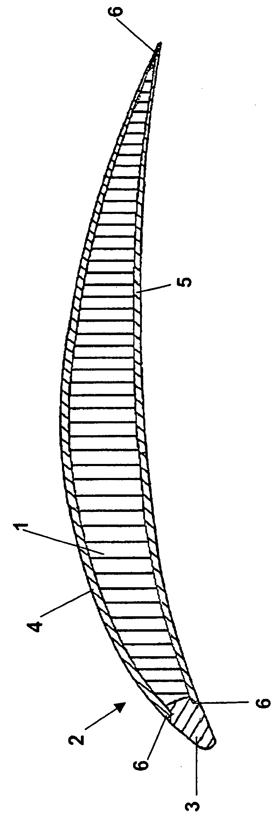

Ausführungsbeispiele der Erfindung werden anhand der Zeichnung, in deren einziger Figur eine Schnittansicht einer Hybrid-Fanschaufel im Schaufelblattbereich wiedergegeben ist, näher erläutert.

Die Hybrid-Fanschaufel umfasst eine den Schaufelfuß und das Schaufelblatt einer Fanschaufel bildende Tragstruktur 1 aus Faserverbundwerkstoff und eine auf das Schaufelblatt beschränkte metallische Hüllstruktur 2, die aus einem die Schaufelblattvorderkante bildenden Formstück 3 aus massivem Metall sowie einem saugseitigen Deckblech 4 und einem druckseitigen Deckblech 5 besteht. Die beiden Deckbleche 4 und 5 sind über Schweißnähte 6 jeweils mit dem Formstück 3 und an der Hinterkante miteinander verbunden und saugseitig auf Zug sowie druckseitig auf Druck elastisch vorgespannt.

Bei der Herstellung der Fanschaufel gemäß einer ersten Verfahrensvariante wird zunächst das druckseitige Deckblech 5 mit dem Formstück 3 verschweißt und anschließend die vorgefertigte Tragstruktur 1 aus Faserverbundwerkstoff im Bereich des Schaufelblattes mit der Innenfläche des druckseitigen Deckblechs 5 mittels eines duktilen Klebers verklebt. Anschließend wird die noch freie Fläche (Saugseite) der Tragstruktur 1 ebenfalls mit einem duktilen Kleber bestrichen. Danach wird das saugseitige Deckblech 4 erwärmt und aufgrund der Wärmedehnung gelängt und in diesem Zustand mit dem Formstück 3 und mit der Hinterkante des druckseitigen Deckblechs 5 verschweißt. Beim darauf folgenden Abkühlen verkürzt sich das saugseitige Deckblech 4 wieder auf seine Ausgangslänge und wird dabei elastisch auf Zug vorgespannt, wobei infolge der Zugspannung gleichzeitig das konkav geformte druckseitige Deckblech 5 elastisch auf Druck vorgespannt wird und das Schaufelblatt dabei seine Endkontur erreicht. Das heißt, die beiden elastisch vorgespannten Deckbleche 4 und 5 werden unter Zugspannung bzw. Druckspannung an die Tragstruktur aus Faserverbundmaterial gepresst, so dass - zumal sich die hohe Biegebelastung zwischen dem hüllstrukturfreien Schaufelfuß und dem Schaufelblatt in verringertem Umfang auf das Schaufelblatt auswirkt - die Gefahr von Delaminationen zwischen der Hüllstruktur 2 und der Tragstruktur 1 minimiert wird.

Gemäß einer zweiten Verfahrensvariante zur Herstellung von Hybrid-Fanschaufeln mit unter Zug- bzw. Druckvorspannung an die Tragstruktur angepressten Deckblechen 4 und 5 wird in einem Schweißformwerkzeug zunächst das druckseitige Deckblech 5 mit dem Formstück 3 verschweißt und anschließend das zur Herstellung der Tragstruktur 1 erforderliche Fasermaterial, beispielsweise eine Vielzahl von Kohlenstofffaserlagen in das Schweißformwerkzeug und dabei auf das druckseitige Deckblech 5 aufgelegt. Anschließend wird das saugseitige Deckblech 4 des Schaufelblattes mit dem Formstück 3 und der Hinterkante des druckseitigen Deckblechs 5 verschweißt, und zwar so, dass die beiden Deckbleche der Hüllstruktur 2 - begrenzt durch das Schweißformwerkzeug - enger zusammenliegen als für das Fertigmaß des Schaufelblattes vorgesehen ist. Danach wird das Kohlenstofffasergelege mit der für das Schaufelblatt vorgesehenen Hüllstruktur 2 in ein Infiltrationswerkzeug eingelegt, dessen Innenmaße der Endkontur der Fanschaufel entsprechen. An dem zum Schaufelfuß hin offenen Ende der auf das Schaufelblatt beschränkten Hüllstruktur 2 ist zum Fasergelege hin eine Dichtung angeordnet. Jetzt wird in das Infiltrationswerkzeug ein Infiltrationsharz eingebracht, und zwar unter einem Druck, der so hoch ist, dass in der abgedichteten schlanken Vorform der Hüllstruktur das saugseitige Deckblech 4 bis zur Anlage an der Infiltationswerkzeugkontur gedehnt und dabei unter Zugspannung an die jetzt fertige Tragstruktur aus infiltrierten Kohlenstofffasern gepresst wird, wobei gleichzeitig das konkave druckseitige Deckblech 5 eine elastische Druckspannung auf die Tragstruktur ausübt. Das heißt, auch bei der so hergestellten Hybrid-Fanschaufel werden die beiden Deckbleche 4 und 5 der im Schaufelbereich vorgesehen Hüllstruktur 2 unter elastischer Vorspannung an die Tragstruktur gepresst, so dass die Delaminationsgefahr verringert und damit die Lebensdauer der Schaufel erhöht werden kann.

### Bezugszeichenliste

- 1: Tragstruktur
- 2: Hüllstruktur
- 3: Formstück
- 4: saugseitiges, konvex gewölbtes Deckblech
- 5: druckseitiges, konkav gewölbtes Deckblech
- 6: Schweißnähte

## Patentansprüche

1. Hybrid-Fanschaufel für ein Gasturbinentriebwerk, die eine Tragstruktur (1) aus einem Faserverbundwerkstoff und eine metallische Hüllstruktur (2), bestehend aus einem konvex gewölbten saugseitigen Deckblech (4) und einem mit diesem verbundenen konkav gewölbten druckseitigen Deckblech (5), umfasst, **dadurch gekennzeichnet, dass** die Hüllstruktur (2) auf den Bereich des Schaufelblattes beschränkt ist und das saugseitige Deckblatt (4) elastisch auf Zug vorgespannt ist, so dass das druckseitige Deckblech (5) unter einer elastischen Druckspannung steht und beide Deckbleche elastisch an die Tragstruktur (1) gepresst sind.

2. Hybrid-Fanschaufel nach Anspruch 1, **dadurch gekennzeichnet, dass** die Deckbleche (4, 5) an der Schaufelvorderkante mit einem Formstück (3) aus massivem Metall und an der Schaufelhinterkante unmittelbar miteinander verschweißt sind.

3. Verfahren zur Herstellung einer Hybrid-Fanschaufel nach Anspruch 1, die eine Tragstruktur (1) aus einem Faserverbundwerkstoff und eine die Tragstruktur (1) im Bereich des Schaufelblattes umhüllende metallische Hüllstruktur (2), bestehend aus einem auf der Druckseite und einem auf der Saugseite des Schaufelblattes angebrachten Deckblech (4, 5), umfasst, **dadurch gekennzeichnet, dass** zunächst eine aus einer Vielzahl von Faserschichten und einem infiltrierten Harz vorgefertigte Tragstruktur (1) im Bereich des Schaufelblattes mit dem druckseitigen Deckblech (5) verklebt wird und danach auf der gegenüberliegenden Seite der Tragstruktur (1) ein durch vorangegangenes Erwärmen gelängtes saugseitiges Deckblech (4) verklebt wird und anschließend die beiden Deckbleche (4, 5) an den Vorder- und Hinterkanten verschweißt werden, wobei das saugseitige Deckblech (4) beim Abkühlen gekürzt und elastisch auf Zug vorgespannt wird und dadurch das konkav gewölbte druckseitige Deckblech (5) elastisch auf Druck vorgespannt wird und damit die Hüllstruktur (2) beidseitig elastisch an die Tragstruktur (1) gepresst wird.

4. Verfahren zur Herstellung einer Hybrid-Fanschaufel nach Anspruch 1, die eine Tragstruktur (1) aus einem Faserverbundwerkstoff und eine die Tragstruktur (1) im Bereich des Schaufelblattes umhüllende metallische Hüllstruktur (2), bestehend aus einem auf der Druckseite und einem auf der Saugseite des Schaufelblattes angebrachten Deckblech (4, 5), umfasst, **dadurch gekennzeichnet, dass** das saugseitige Deckblech (4) bei lose eingelegten Faserschichten so mit dem druckseitigen Deckblech (5) verschweißt wird, dass es näher als in der geplanten Fertigkontur zum druckseitigen Deckblech (5) positioniert ist, und anschließend in einem Formwerkzeug in das Fasergelege für den Schaufelfuß sowie in das in der vorgeformten und abgedichteten Hüllstruktur befindliche Fasergelege unter einem solchen Druck ein Harz infiltriert wird, dass das saugseitige, konvexe Deckblech (4) bis zum Erreichen der Fertigkontur der Hüllstruktur (2) elastisch gedehnt und damit auf Zug vorgespannt wird und dabei das konkav gewölbte druckseitige Deckblech (4) elastisch auf Druck vorgespannt wird, so dass die Hüllstruktur (2) beidseitig elastisch an die Tragstruktur (1) gepresst wird.

## Claims

1. Hybrid fan blade for a gas-turbine engine which blade includes a supporting structure (1) in a fiber-composite material as well as a metallic enveloping structure (2) consisting of a convex suction-side sheet-metal cover (4) and a concave pressure-side sheet-metal cover (5) connected to the latter, **characterized in that** the enveloping structure (2) is confined to the airfoil area and the suction-side sheet-metal cover (4) is elastically pre-stressed in tension such that the pressure-side sheet-metal cover (5) is subjected to an elastic compressive stress and both sheet-metal covers are elastically pressed against the supporting structure (1).

2. Hybrid fan blade in accordance with Claim 1, **characterized in that** the sheet-metal covers (4, 5) are welded to a solid-metal former (3) at the blade leading edge and directly to each other at the blade trailing edge.

3. Method for the manufacture of a hybrid fan blade in accordance with Claim 1, which includes a supporting structure (1) in a fiber-composite material as well as a metallic enveloping structure (2) enclosing the supporting structure (1) in the area of the airfoil, consisting of sheet-metal covers (4, 5), one arranged on the pressure side and one on the suction side of the airfoil, **characterized in that** a supporting structure (1) pre-manufactured from a plurality of fiber layers and an infiltrated resin is initially bonded to the pressure-side sheet-metal cover (5) in the area of the airfoil, and **in that** subsequently on the opposite side of the supporting structure (1) a previously thermally expanded suction-side sheet-metal cover (4) is adhesively bonded, and afterwards the two sheet-metal covers (4, 5) are welded to the leading and trailing edges, with the suction-side sheet-metal cover (4), which recontracts by cooling, being elastically pre-stressed in tension and the concave pressure-side sheet-metal cover (5) being elastically pre-stressed in compression, thereby pressing the enveloping structure (2) elastically on both sides against the supporting structure (1).

4. Method for the manufacture of a hybrid fan blade in accordance with Claim 1, which includes a supporting structure (1) in a fiber-composite material as well as a metallic enveloping structure (2) enclosing the supporting structure (1) in the area of the airfoil, consisting of sheet-metal covers (4, 5), one arranged on the pressure side and one on the suction side of the airfoil, **characterized in that** the suction-side sheet-metal cover (4) with loosely laid-in fiber layers, is welded to the pressure-side sheet-metal cover (5) such that it is closer positioned to the pressure-side sheet-metal cover (5) than in the projected final contour, and **in that** subsequently a resin is infiltrated in a molding tool into the fiber lay-up for the blade root as well as into the fiber lay-up in the pre-formed and sealed enveloping structure under such a pressure that the suction-side convex sheet-metal cover (4) is elastically expanded until the final contour of the enveloping structure (2) is reached, thereby being pre-stressed in tension, and the concave pressure-side sheet-metal cover (5) is elastically pre-stressed in compression, thereby pressing the enveloping structure (2) elastically on both sides against the supporting structure (1).

## Revendications

1. Aube de soufflante hybride pour un moteur à turbine à gaz, ladite aube comprenant une structure portante (1) en un matériau composite renforcé par des fibres, et une structure enveloppante (2) métallique constituée d'une coiffe (4) cambrée convexe côté aspiration et d'une coiffe (5) cambrée concave côté refoulement reliées entre elles, **caractérisée en ce que** la structure enveloppante (2) est limitée à la zone de la pale et que la coiffe (4) côté aspiration est sous précontrainte de traction élastique de sorte que la coiffe (5) côté refoulement est soumise à une contrainte de compression élastique et que les deux coiffes sont pressées sur la structure portante (1) de manière élastique.

2. Aube de soufflante hybride selon la revendication n° 1, **caractérisée en ce que** les coiffes (4, 5) sont soudées au bord d'attaque d'aube avec une pièce profilée (3) en métal massif et directement entre elles au bord de fuite d'aube.

3. Procédé destiné à fabriquer une aube de soufflante hybride selon la revendication n° 1, ladite aube comprenant une structure portante (1) en un matériau composite renforcé par des fibres et une structure enveloppante (2) métallique qui enveloppe la structure portante (1) dans la zone de la pale et est constituée de deux coiffes (4, 5) disposées respectivement du côté refoulement et du côté aspiration de la pale, **caractérisé en ce que** tout d'abord, une structure portante (1) préfabriquée à partir d'une pluralité de couches de fibres et d'une résine infiltrée est collée avec la coiffe (5) côté refoulement dans la zone de la pale, qu'ensuite du côté opposé de la structure portante (1) est collée une coiffe (4) côté aspiration allongée par chauffage préalable, et qu'enfin les deux coiffes (4, 5) sont soudées aux bords d'attaque et de fuite, sachant qu'en refroidissant, la coiffe (4) côté aspiration est raccourcie et mise sous précontrainte de traction élastique et que, de ce fait, la coiffe (5) cambrée concave côté refoulement est soumise à une contrainte de compression élastique, et qu'ainsi la structure enveloppante (2) est pressée des deux côtés sur la structure portante (1) de manière élastique.

4. Procédé destiné à fabriquer une aube de soufflante hybride selon la revendication n° 1, ladite aube comprenant une structure portante (1) en un matériau composite renforcé par des fibres et une structure enveloppante (2) métallique qui enveloppe la structure portante (1) dans la zone de la pale et est constituée de deux coiffes (4, 5) disposées respectivement du côté refoulement et du côté aspiration de la pale, **caractérisé en ce qu'**avec des couches de fibres appliquées librement, la coiffe (4) côté aspiration est soudée à la coiffe (5) côté refoulement de manière telle qu'elle est positionnée plus près de la coiffe (5) côté refoulement que dans le contour définitif prévu, et qu'ensuite, dans un outil de formage dans le matelas de fibres pour le pied d'aube ainsi que dans le matelas de fibres se trouvant dans la structure enveloppante préformée et étanchée, est infiltrée une résine sous une pression telle que la coiffe (4) convexe côté aspiration est étirée de manière élastique jusqu'à atteindre le contour définitif de la structure enveloppante (2) et est ainsi mise sous précontrainte de traction, et que de ce fait, la coiffe (5) cambrée concave côté refoulement est soumise à une contrainte de compression élastique, de sorte que la structure enveloppante (2) est pressée des deux côtés sur la structure portante (1) de manière élastique.
